# EUROPÄISCHE PATENTSCHRIFT

(11) **EP 2 898 145 B1**
(45) Veröffentlichungstag und Bekanntmachung des Hinweises auf die Patenterteilung: **23.05.2018**
(21) Anmeldenummer: 13759501.3
(22) Anmeldetag: 06.09.2013
(51) Int. Cl.: B06B 1/12, B06B 1/18, F16F 7/10, D21F 1/18

(54) **SCHÜTTELWERK UND VERFAHREN ZUR PNEUMATISCHEN ANREGUNG EINES SCHÜTTELWERKS**
SHAKING UNIT AND METHOD FOR THE PNEUMATIC EXCITATION OF A SHAKING UNIT
MÉCANISME À SECOUSSES ET PROCÉDÉ D'ACTIVATION PNEUMATIQUE D'UN MÉCANISME À SECOUSSES

(30) Priorität: 18.09.2012 DE 102012018362; 18.09.2012 DE 102012018363; 25.03.2013 DE 102013205180
(43) Veröffentlichungstag der Anmeldung: 29.07.2015
(73) Patentinhaber: Voith Patent GmbH, 89522 Heidenheim (DE)
(72) Erfinder: BANNING, Jürgen, 52349 Düren (DE)
(86) Internationale Anmeldenummer: PCT/EP2013/068462
(87) Internationale Veröffentlichungsnummer: WO 2014/044555

(56) Entgegenhaltungen:
- EP-A1- 0 635 601
- EP-A2- 1 624 102
- WO-A1-02/38365
- WO-A1-2009/138491
- DE-U1- 9 317 640
- US-A- 5 759 354
- US-B1- 7 051 588

## Beschreibung

Die Erfindung betrifft ein Schüttelwerk sowie ein Verfahren zur pneumatischen Anregung eines Schüttelwerks.

Im Einzelnen betrifft die Erfindung ein Schüttelwerk zur Erzeugung von eindimensionalen Schwingbewegungen einer Maschinenteilmasse mit einem Koppelteil zur mechanischen Ankopplung an die Maschinenteilmasse, mit einer Gegenmasse, die federelastisch mit dem Koppelteil und hierüber mit der Maschinenteilmasse gekoppelt ist, und mit einem zwischen dem Koppelteil der Gegenmasse federnd wirksamen Antriebssystem. Auch betrifft die Erfindung ein Verfahren zur pneumatischen Anregung eines Schüttelwerks zur Erzeugung von eindimensionalen Schwingbewegungen einer Maschinenteilmasse mit einem Koppelteil zur mechanischen Ankopplung an die Maschinenteilmasse, mit einer Gegenmasse, die federelastisch mit dem Koppelteil und hierüber mit der Maschinenteilmasse gekoppelt ist, und mit einem zwischen dem Koppelteil und der Gegenmasse federnd wirksamen Antriebssystem.

Derartige Schüttelwerke sowie derartige Anregungsverfahren sind beispielsweise aus der EP 0 635 601 A1, der WO 2009/138491 A1 und aus der US 5,759,354 bekannt. Hierbei wird eine Maschinenteilmasse, und zwar insbesondere eine Walze einer Papiermaschine, wie beispielsweise die Brustwalze einer Papiermaschine, mittels des Schüttelwerks zu eindimensionalen Schwingbewegungen parallel zur Walzenachse angeregt. Die Schüttelwerke umfassen hierbei jeweils ein Koppelteil zur mechanischen Ankopplung an die Maschinenteilmasse, wobei die EP 0 635 601 A1 und die WO 2009/138491 A1 darüber hinaus eine Gegenmasse offenbaren, die federelastisch mit dem Koppelteil und hierüber mit der Maschinenteilmasse gekoppelt ist. Die federelastische Kopplung erfolgt bei der Anordnung nach der WO 2009/138491 A1 über eine hydraulische Zylinder-Kolben-Einheit, während die EP 0 635 601 A1 hierfür eine Kolben-Zylinder-Einheit mit in entsprechenden Hubräumen angeordneten Federn unter Zuhilfenahme von durch die Hubräume und ein entsprechendes Füllgas dieser Hubräume gebildete Gasfedern nutzt. Darüber hinaus weist die Anordnung nach der EP 0 635 601 A1 einen Zusatzkolben auf, welcher pneumatisch angesteuert werden kann, um eine entsprechende Schwingung in der gewünschten Weise anzuregen. Auch ist den Anordnungen der EP 0 635 601 A1 und der WO 2009/138491 A1 gemein, dass die Gegenmasse ein verhältnismäßig hohes Gewicht aufweisen muss und letztlich frei zugänglich hin und her schwingt, während sie zugleich einen Zylinder trägt, in welchem seinerseits ein Kolben hin und her läuft, welcher in Schwingungsrichtung starr mit der Maschinenteilmasse, also mit der jeweiligen Walze, verbunden ist. Aus EP 1 624 102 A2 ist eine Schüttelvorrichtung bekannt, die mechanisch angeregt ist und deren Koppelteil als Rahmen die Gegenmasse umgibt.

Es ist Aufgabe vorliegender Erfindung, ein gattungsgemäßes Schüttelwerk bzw. ein gattungsgemäßes Anregungsverfahren bereitzustellen, welche weniger komplex bauen.

Als Lösung werden Schüttelwerke bzw. Anregungsverfahren mit den Merkmalen der unabhängigen Ansprüche vorgeschlagen. Weitere vorteilhafte Ausgestaltungen finden sich in den Unteransprüchen sowie der nachfolgenden Beschreibung.

Die Erfindung geht hierbei von der gemeinsamen Grunderkenntnis aus, dass durch einen hochsymmetrischen Aufbau des Schüttelwerks eine entsprechend kompakte Bauweise möglich ist.

Gemäß der Erfindung zeichnet sich ein Schüttelwerk zur Erzeugung von eindimensionalen Schwingbewegungen einer Maschinenteilmasse mit einem Koppelteil zur mechanischen Ankopplung an die Maschinenteilmasse, mit einer Gegenmasse, die federelastisch mit dem Koppelteil und hierüber mit der Maschinenteilmasse gekoppelt ist, und mit einem zwischen dem Koppelteil und der Gegenmasse federnd wirksamen Antriebssystem, wobei das Koppelteil als Rahmen die Gegenmasse umgibt und die Gegenmasse darin hin und her schwingend angeordnet ist dadurch aus, das das Antriebssystem zwei beidseits der Gegenmasse angeordnete Gasfedern umfasst. Hierdurch folgt eine hochsymmetrische Einwirkung der Gasfedern, seien diese durch Hubräume eines in einem Zylinder angeordnete Kolben, durch Bälge oder ähnliche Einrichtungen realisiert, jeweils mittels Druck auf die Gegenmasse, so dass komplexe, auf Zug und Druck wirksame Stangen und sehr filigrane Zylinder, welche von der Gegenmasse abstehen, wie dieses beispielsweise in der EP 0 635 601 A1 offenbart ist, vermieden werden können. Durch die Verwendung von Gasfedern kann darüber hinaus auf komplexe hydraulische Systeme entsprechend der WO 2009/138491 A1 verzichtet werden.

Erfindungsgemäß ist das Antriebssystem pneumatisch angeregt, wie dieses allerdings bereits in der EP 0 635 601 A1 offenbart ist. Ein kompakter Aufbau kann jedoch dadurch realisiert werden, dass die pneumatische Anregung unmittelbar auf die Gasfedern wirkt, so dass beispielsweise auf ein zusätzliches, hierfür notwendiges Gestänge verzichtet werden kann.

Auch zeichnet sich das erfindungsgemäße Schüttelwerk zur Erzeugung von eindimensionalen Schwingbewegungen einer Maschinenteilmasse dadurch aus, dass das Koppelteil als Rahmen die Gegenmasse umgibt. Durch dieses Umgeben der Gegenmasse, ergibt sich einerseits ein entsprechend symmetrisch und kompakter Aufbau. Andererseits ist es bei geeigneter und im nachfolgenden näher erläuterter Ausführungsweise möglich, die Zahl der von der außen zugänglichen, beweglichen Baugruppen auf ein Minimum zu reduzieren, so dass einerseits ein Schutz vor Verschmutzung sowie etwaige Dichtungsproblematiken verbessert werden und andererseits Unfallschutzmaßnahmen vermindert werden können.

Insbesondere kann das Koppelteil ein Schüttelwerkgehäuse sein, in welchem die Gegenmasse angeordnet ist. Auf diese Weise ist die an sich hin und her schwingende Gegenmasse durch das Schüttelwerkgehäuse geschützt, welches dann, da es als Koppelteil genutzt wird, mit der Maschinenteilmasse entsprechend verbunden ist. Insofern können insbesondere Durchführungen durch einen Zylinder, wie sie in der EP 0 635 601 A1 oder auch der WO 2009/0138491 A1 zwingend notwendig sind, vermieden werden. Auf diese Weise resultiert mithin ein sehr kompakt bauendes Schüttelwerk, bei welchem Dichtungen und Durchführungen, welche naturgemäß einer Verschmutzungsgefahr unterliegen, wegfallen. Durch die Anordnung der Gegenmasse in dem Schüttelwerkgehäuse verbleibt von außen zugänglich lediglich eine Baugruppe, welche gleichförmig mit der Maschinenteilmasse schwingt, da die Gegenbewegung der Gegenmasse innerhalb des Schüttelwerkgehäuses stattfindet, so dass aufgrund dieser lediglich einen Bewegungsrichtung bei geeigneter Ausgestaltung des Schüttelwerks dementsprechend auch eine Unfallgefahr weiter reduziert ist.

Je nach konkreter Umsetzung kann das Koppelteil die Gegenmasse gasdicht umgeben. Dieses gilt insbesondere dann, wenn das Koppelteil ein Schüttelwerkgehäuse ist, in welchem die Gegenmasse angeordnet ist. Durch eine derartige Gasdichtigkeit können Durchführungen, die unter Druck stehen, wie diese zum Beispiel zwingend an den Durchführungen von Kolbenstangen aus mit Druck beaufschlagten Zylindern auftreten, gänzlich vermieden werden. Bei einer derartigen Ausgestaltung kann das Koppelteil bzw. das Schüttelwerkgehäuse unter Zuhilfenahme der Gegenmasse jeweils beidseits der Gegenmasse Gasfedern bilden, die dann federnd oder gegebenenfalls auch zur pneumatischen Anregung genutzt werden können.

In einer alternativen Ausführungsform ist es nicht notwendig, dass das Koppelteil die Gegenmasse gasdicht umgibt. In dieser alternativen Ausführungsform kommen separate Gasfedern, wie beispielsweise Bälge oder durch andere geeignete, unter Gasdruck stehende Anordnungen, zur Anwendung, die jeweils zwischen dem Koppelteil bzw. dem Schüttelwerkgehäuse und der Gegenmasse wirken.

Je nach konkreter Umsetzung ist es dann nur noch nötig, entsprechende Gasanschlüsse vorzusehen, um eine pneumatische Anregung oder aber ein Nachführen von Leckagen zur ermöglichen. Insbesondere können bei geeigneter Ausgestaltung Leckagen nach außen, die bei Kolbenstangen, welche hin und her durch eine Durchführung bewegt werden, vollständig vermieden werden.

Letztlich ist es möglich, das Koppelteil in die Maschinenteilmasse selbst zu integrieren, so dass das gesamte Schüttelwerk innerhalb der Maschinenteilmasse, beispielsweise innerhalb einer Walze, angeordnet ist. Auch bei einer derartigen Ausgestaltung, welche besonders kompakt baut, umgibt dann das Koppelteil in Form eines das Schüttelwerkgehäuse bildenden Maschinenteilrahmens, wie beispielsweise in Form eines Walzenkörpers, die Gegenmasse.

Vorzugsweise ist die Gegenmasse schwingfähig an dem Koppelteil gelagert, so dass auf weitere, die Gegenmasse lagernde Maßnahmen verzichtet werden kann. Auch dieses bedingt eine entsprechende Kompaktheit des gesamten Schüttelwerks.

In einer praktischen Ausführungsform der Erfindung ist es auch denkbar, dass sich die Gegenmasse aus mehreren Teilmassen zusammensetzt. Dabei sind die Teilmassen vorzugsweise, zur Bildung einer einzigen Schwingmasse, starr miteinander gekoppelt.

Ferner ist es auch denkbar, dass die Teilmassen dabei so ausgestaltet sein können, dass sie beispielsweise einen Raum zur Speicherung von Fluid, beispielsweise Gas und/oder Flüssigkeit bilden.

Es ist auch möglich, dass der Raum zur Speicherung von Fluid, beispielsweise Gas und/oder Flüssigkeit in der Gegenmasse vorhanden ist.

Durch eine hydrostatische oder hydrodynamische Lagerung aber auch gegebenenfalls durch eine pneumatische Lagerung kann eine besonders reibungsarme Lagerung gewährleistet werden, wodurch Verluste und mithin die in das Schüttelwerk einzubringende Gesamtenergie, um beispielsweise ein Schwingen in Resonanz aufrechtzuerhalten, auf ein Minimum reduziert werden können.

Hierbei lassen sich Reibungsverluste insbesondere dadurch minimieren, dass die Gegenmasse in der hydrostatischen oder -dynamischen Lagerung aufschwimmt.

Vorzugsweise ist die hydrostatische oder -dynamische Lagerung eine Ölumlaufschmierung, so dass zu allen Betriebspositionen und -zuständen ausreichend Öl vorliegt.

Je nach konkreter Umsetzung kann insbesondere im Zusammenspiel mit einer aufschwimmenden Gegenmasse ein verhältnismäßig geringes Kolbengewicht ausreichen, um in ausreichende Resonanzbewegung zu geraten. Auch ist es denkbar, die Gegenmasse mit Ausnehmungen, welche durch Trennwände begrenzt sind, zu versehen, um auf diese Weise die benötigte Hubraumgröße - und mithin die Größe eines Schüttelwerkgehäuses, beispielsweise wenn dieses eine kolbenartig ausgebildete Gegenmasse umgibt - zu minimieren.

Darüber hinaus können durch ein Aufschwimmen der Gegenmasse die Gleitflächen derselben minimiert werden, was Verluste weiter verringert. Dieses kann auch dadurch gelingen, dass die Viskosität des verwendeten Öls verringert wird, was dementsprechend zu geringeren Verlusten führt.

Gegebenenfalls kann der Druck der Ölumlaufschmierung gegenüber dem für ein betriebssicheres Aufschwimmen notwendigen Druck erhöht werden, um Leckagen an der Gegenmasse vorbei durch die Ölschmierung hindurch auf ein Minimum zu reduzieren.

Obgleich letztlich die Lagerung der Gegenmasse in Bezug auf das Koppelteil für die Verluste von erheblicher Bedeutung ist, ist es von Vorteil, wenn auch das Koppelteil schwingfähig in Bezug auf einen Maschinenboden gelagert ist. Naturgemäß schwingt das Koppelteil mit der Frequenz und Amplitude des Maschinenteils bzw. der Maschinenteilmasse, welche durch das Schüttelwerk zu Schwingungen angeregt werden soll. Insofern ist es von Vorteil, wenn hier entsprechende Maßnahmen vorgesehen sind, wobei vorzugsweise ähnliche Baugruppen zur Anwendung kommen können, wie sie auch der Lagerung der Maschinenteilmasse dienen.

Zwischen dem Koppelteil und der Maschinenteilmasse kann gegebenenfalls ein Gelenk vorgesehen sein, um eine größere Montagetoleranz in vertikaler Richtung zu gestatten und insbesondere auf baulich einfache Weise ein Auswechseln von Brustwalzen mit geringfügig unterschiedlichen Durchmessern zu erlauben, ohne das Schüttelwerk aufwendig nachjustieren zu müssen. Hierzu ist es insbesondere von Vorteil, wenn auch das Schüttelwerk über ein Gelenk abgestützt ist.

Gleichwohl ist es nach wie vor von Vorteil, wenn die Verbindung zwischen dem Koppelteil und der Maschinenteilmasse in Richtung der Schwingbewegung starr ausgebildet ist, um die Schwingungen unmittelbar und ohne irgendwelche Überlagerungsschwingungen umsetzen zu können.

Es versteht sich, dass ein derartiges Gelenk zwischen dem Koppelteil und der Maschinenteilmasse und/oder eine derartige gelenkige Abstützung des Schüttelwerks auf einem Maschinenboden auch unabhängig von den übrigen Merkmalen vorliegender Erfindung dementsprechend vorteilhaft sind.

An sich kann das Schüttelwerk einfach mechanisch angeregt werden, indem beispielsweise ein Exzenter oder eine entsprechend angeregte Erregermasse mit definierter Anregungsfrequenz an der Gegenmasse oder auch an dem Koppelglied angesetzt wird. Diese Ausführung ist jedoch nicht von den Ansprüchen geschützt.

Gemäß der Erfindung erfolgt jedoch eine pneumatische Anregung.,Ein Verfahren zur pneumatischen Anregung eines Schüttelwerks zur Erzeugung von eindimensionalen Schwingbewegungen einer Maschinenteilmasse mit einem Koppelteil zur mechanischen Ankopplung an die Maschinenteilmasse, mit einer Gegenmasse, die federelastisch mit dem Koppelteil und hierüber mit der Maschinenteilmasse gekoppelt ist, und mit einem zwischen dem Koppelteil und der Gegenmasse federnd wirksamen Antriebssystem dadurch auszeichnen kann, dass Koppelteil als Rahemn die Gegenmasse umgibt und die Gegenmasse darin hin und her schwingend angeordnet ist und wenigstens eine von zwei beidseits der Gegenmasse angeordneten Gasfedern des Antriebssystems in Abhängigkeit von einem Schwingungszustand mit einem minimalen und/oder mit einem maximalen Ladedruck der Gasfeder beaufschlagt wird. Auf diese Weise kann auf eine separate Anregung verzichtet werden, wobei ein Beaufschlagen der Gasfedern über entsprechende Druckleitungen ohne weiteres ohne großen baulichen Aufwand realisiert werden kann.

Es ist hierbei letztlich regelungstechnischer Standard eine Resonanzfrequenz eines schwingungsfähigen Systems dadurch anzuregen, dass zu geeigneten Zeitpunkten innerhalb eines Schwingungszyklusses, also zu geeigneten Schwingungszuständen, dem Schwingungssystem Energie zugeführt wird, um die Schwingung aufrechtzuerhalten. Diese Energiezufuhr kann insbesondere dadurch erfolgen, dass eine unter hohem Druck stehende Gasfeder mit noch mehr Druck beaufschlagt wird, so dass etwaige Energieverluste, welche auf dem Hinweg während des Druckaufbaus aufgetreten sind, hierdurch ausgeglichen werden können. Der Rückweg erfolgt dann wieder mit der notwendigen Energie, um einen vollen Schwingungshub durchführen zu können. Hierbei versteht es sich, dass dieses bei den Gasfedern auf beiden Seiten der Gegenmasse entsprechend durchgeführt werden kann. Ebenso versteht es sich, dass es unter Umständen ausreicht, dieses lediglich an einer der beiden Gasfedern vorzusehen.

Ebenso versteht es sich, dass es möglicherweise ausreichend ist, lediglich den maximalen Ladedruck zu entsprechenden Zeiten aufzugeben. Ebenso ist es alternativ auch denkbar, in Schwingungszuständen, bei denen sehr niedriger Ladedruck vorliegt, den Ladedruck auf einen minimalen Druck abzusenken, um hier ergänzend die Schwingung anzuregen.

Darüber hinaus ist es an sich denkbar, die Schwingungsfrequenz der Schwingbewegung über den jeweiligen Ladedruck der Gasfedern zu beeinflussen, so dass die Schwingung ohne große Umrüstmaßnahmen an momentan benötigte Verhältnisse angepasst werden kann.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: eine schematische Seitenansicht einer Brustwalze als Maschinenteilmasse sowie eines ersten Schüttelwerks;
- Figur 2: eine schematische Seitenansicht einer Brustwalze als Maschinenteilmasse sowie eines zweiten Schüttelwerks;
- Figur 3: eine schematische Seitenansicht einer Brustwalze als Maschinenteilmasse sowie eines dritten Schüttelwerks;
- Figur 4: eine Brustwalze als Maschinenteilmasse mit integriertem Schüttelwerk in ähnlicher Darstellungsart wie Figuren 1 bis 3;
- Figur 5: eine schematische Seitenansicht einer Brustwalze als Maschinenteilmasse sowie eines vierten Schüttelwerks, das von den Ansprüchen nicht geschützt wird; und
- Figur 6: einen Schnitt durch ein alternatives Schüttelwerk.

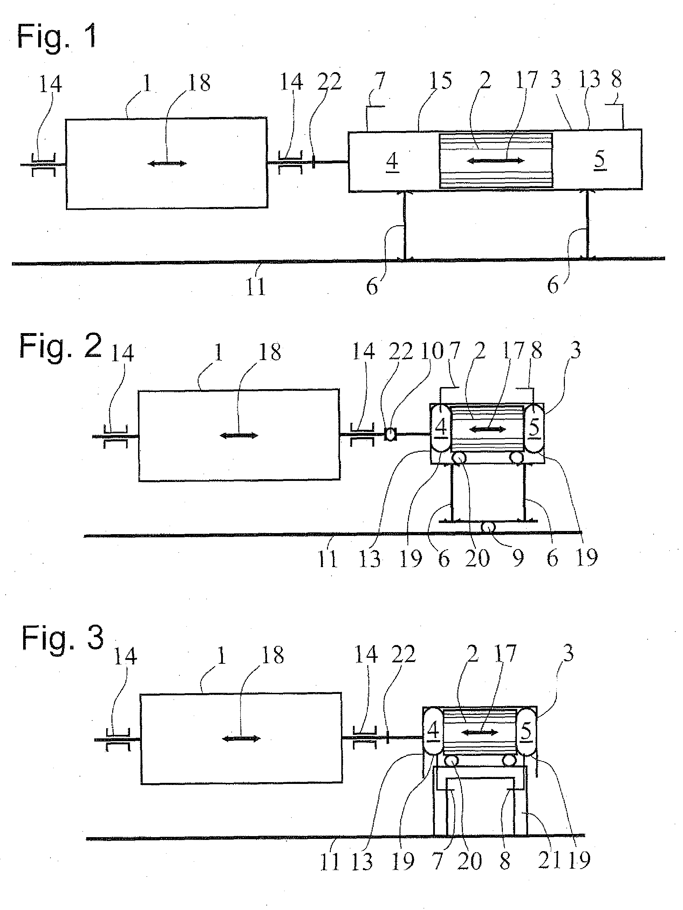

Die in Figur 1 dargestellte Anordnung aus einer Maschinenteilmasse 1 und einem eine Gegenmasse 2 umfassenden Schüttelwerk 3 lagert die Maschinenteilmasse 1 in an sich bekannten Lagern 14 in an sich bekannter Weise.

Hierbei umfasst das Schüttelwerk 3 einen Zylinder 15, welcher als Schüttelwerkgehäuse 13 die Gegenmasse 2 umgibt und beidseits der Gegenmasse 2 Hubräume 4, 5 bildet, die unter Mitwirkung der Gegenmasse 2 als Kolben zwei Gasfedern bilden. Das Schüttelwerk 3 ist auf zwei Rollstützen 6 am Maschinenboden 11 abgestützt und über eine Kupplung 22 in an sich bekannter Weise mit der Maschinenteilmasse 1, welche bei diesem Ausführungsbeispiel eine Brustwalze einer Papiermaschine ist, gekoppelt.

Über Druckluftleitungen 7, 8 wird die Gegenmasse 2 zu Schwingungen 17 (Doppelpfeil) angeregt. Das System aus Maschinenteilmasse 1 und Zylinder 15 folgt dementsprechend mit einer Gegenbewegung durch Schwingungen 18 (Doppelpfeil). Die Anregung über die Druckluftleitungen 7, 8 erfolgt hierbei derart, dass das Gesamtsystem in Resonanzfrequenz schwingt.

Die in Figur 2 dargestellte Anordnung entspricht in weiten Teilen der Anordnung nach Figur 1, so dass auf eine doppelte Erläuterung verzichtet wird. In Abweichung zu der Anordnung nach Figur 1 werden bei der Anordnung nach Figur 2 die Hubräume 4, 5 durch Bälge 19 gebildet, die entsprechend mit den Druckluftleitungen 7 und 8 verbunden und in ganz ähnlicher Weise, wie bei der Anordnung nach Figur 1, über diese Druckluftleitungen 7, 8 mit Druckluft beaufschlagt werden. Darüber hinaus ist die Gegenmasse 2 anstelle einer pneumatischen oder hydrostatischen oder -dynamischen Lagerung über Wälzlager 20 in dem Schüttelwerkgehäuse 13 gelagert.

Auch ist bei dem Ausführungsbeispiel nach Figur 2 das Schüttelwerk 3 über ein Gelenk 9 am Maschinenboden 11 und über ein Gelenk 10 mit der Maschinenteilmasse 1 gelagert, wobei das Gelenk 10 in Schwingungsrichtung eigensteif ausgebildet ist. Auf diese Weise kann eine leichtere Anpassung an verschiedene Maschinenteilmassen 1 erfolgen. An der Verwendung der Rollstützen 6 ändert sich bei diesem Ausführungsbeispiel diesbezüglich nichts. Je nach konkreter Umsetzung dieses Ausführungsbeispiels können die Gelenke 9 und/oder 10 während des Betriebs still- bzw. festgelegt werden, um die Gefahr von Überlagerungsschwingungen zu vermeiden.

Bei dem in Figur 3 dargestellten Ausführungsbeispiel ist gegenüber dem Ausführungsbeispiel nach Figur 2 auf eine Lagerung der Gegenmasse 2 in einem Zylinder 15 des Schüttelwerkgehäuses 13 verzichtet worden, und die Gegenmasse 2 ist über Wälzlager 20 auf einem Lagertisch 21 entsprechend schwingfähig gelagert. Dieser Lagertisch 21 trägt auch die Druckluftleitungen 7 und 8 zu den Bälgen 19. Bei dieser Ausgestaltung ist das Schüttelwerkgehäuse 13 nach unten offen, wobei nach wie vor die Gegenmasse 2 eingehaust und entsprechend geschützt ist.

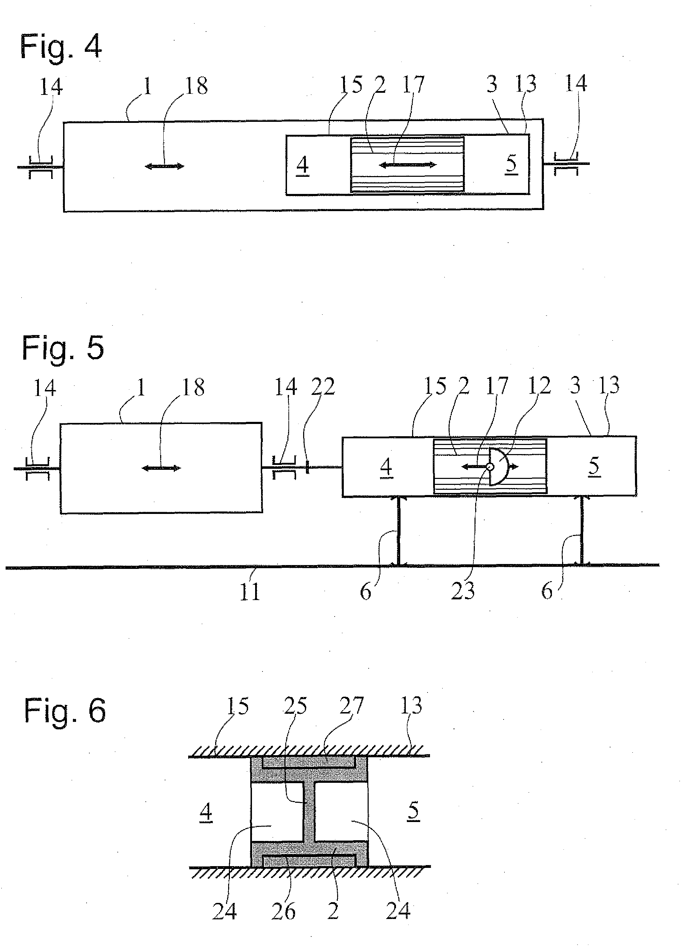

Bei dem in Figur 4 dargestellten Ausführungsbeispiel ist das Schüttelwerk 3 in die Maschinenteilmasse 1, hier ebenfalls am Beispiel einer Brustwalze einer Papiermaschine, integriert. Insofern bildet die Maschinenteilmasse 1 das Schüttelwerksgehäuse und der Zylinder 15 des Schüttelwerks 3 ist in der Maschinenteilmasse 1 angeordnet. Diese Ausgestaltung baut besonders kompakt, wobei ggf. in der Maschinenteilmasse 1 eine autarke Energiequelle zur Anregung einer Resonanzschwingung, wie beispielsweise eine Druckluftspeicher, der entsprechend die Hubräume 4, 5 abwechselnd mit Druck beaufschlagen kann oder wie beispielsweise eine Batterie vorgesehen sein kann. Ebenso können an geeigneter Stelle, wie beispielsweise an Walzenzapfen auf der Rotationsachse Druckluftleitungen vorgesehen sein.

Die in Figur 5 dargestellte Anordnung entspricht im Wesentlichen der Anordnung nach Figur 1, wobei jedoch auf die Druckluftleitungen 7, 8 verzichtet wurde. Zur Energiezufuhr ist in der Gegenmasse 2 eine Erregermasse 12 vorgesehen, die exzentrisch um eine Achse 23 elektromotorisch, aber in abweichenden Ausführungsformen auch auf andere Weise, angetrieben ist. Daher ist diese Ausführungsform nicht von den Ansprüchen geschützt. Die Rotationsfrequenz der Erregermasse 12 wird hierbei so gewählt, dass das Gesamtsystem aus Maschinenteilmasse 1, Zylinder 15 und Gegenmasse 2 hierdurch zu Schwingungen im Bereich einer Resonanzfrequenz angeregt wird. An sich braucht hierbei eine Gaszufuhr zu den Hubräumen 4, 5 nicht vorgesehen sein. Um die Schwingung zu beeinflussen, können jedoch Gasanschlüsse vorgesehen sein, über welche der Gasdruck in den Hubräumen 4, 5 verändert werden kann.

Eine alternative Gegenmasse 2 ist in Figur 6 dargestellt. Diese umfasst Ausnehmungen 24, die durch eine Trennwand 25 begrenzt sind, wodurch gegebenenfalls die Baulänge des Zylinders 15 vermindert werden kann. Auch bildet eine umlaufende Ausnehmung 26 der Gegenmasse 2 dieses Ausführungsbeispiels, welche letztlich alternativ in den Ausführungsbeispielen nach Figuren 1, 4 und 5 zur Anwendung kommen kann, gemeinsam mit dem Zylinder 15 einen Ringraum 27, der mit Schmieröl unter einer Ölumlaufschmierung beaufschlagt werden kann. Vorzugsweise entspricht die Masse der Gegenmasse 2 dieses Ausführungsbeispiels dem Gesamtgewicht des durch die Gegenmasse 2 verdrängten Volumens an Schmieröl, so dass die Gegenmasse 2 annähernd aufschwimmt. Hierdurch können Gleit- und Lagerflächen sowie etwaige Verluste auf ein Minimum begrenzt werden. Durch eine Variation der Trennwand 26, aber auch durch eine zweigeteilte Trennwand, können das Volumen der Hubräume 4, 5 und die Masse der Gegenmasse 2 leicht an gewünschte Verhältnisse angepasst werden.

**Bezugszeichenliste:**

| | | | |
|---|---|---|---|
| 1 | Maschinenteilmasse | 14 | Lager |
| 2 | Gegenmasse | 15 | Zylinder |
| 3 | Schüttelwerk | 17 | Schwingungen |
| 4 | Hubraum | 18 | Schwingungen |
| 5 | Hubraum | 19 | Balg |
| 6 | Rollstützen | 20 | Wälzlager |
| 7 | Druckluftleitung | 21 | Lagertisch |
| 8 | Druckluftleitung | 22 | Kupplung |
| 9 | Gelenk | 23 | Achse |
| 10 | Gelenk | 24 | Ausnehmung |
| 11 | Maschinenboden | 25 | Trennwand |
| 12 | Erregermasse | 26 | umlaufende Ausnehmung |
| 13 | Schüttelwerkgehäuse | 27 | Ringraum |

## Patentansprüche

1. Schüttelwerk (3) zur Erzeugung von eindimensionalen Schwingbewegungen einer Maschinenteilmasse (1) mit einem Koppelteil zur mechanischen Ankopplung an die Maschinenteilmasse (1), mit einer Gegenmasse (2), die federelastisch mit dem Koppelteil und hierüber mit der Maschinenteilmasse (1) gekoppelt ist, und mit einem zwischen dem Koppelteil und der Gegenmasse (2) federnd wirksamen Antriebssystem, wobei das Koppelteil als Rahmen die Gegenmasse (2) umgibt und die Gegenmasse (2) darin hin und her schwingend angeordnet ist, **dadurch gekennzeichnet, dass** das Antriebssystem zwei beidseits der Gegenmasse (2) angeordnete Gasfedern umfasst und pneumatisch angeregt ist und die pneumatische Anregung unmittelbar auf die Gasfedern wirkt.

2. Schüttelwerk (3) nach Anspruch 1, **dadurch gekennzeichnet, dass** das Koppelteil ein Schüttelwerkgehäuse (13) ist, in welchem die Gegenmasse (2) angeordnet ist.

3. Schüttelwerk (3) nach Anspruch 1 oder 2, **dadurch gekennzeichnet, dass** das Koppelteil die Gegenmasse (2) gasdicht umgibt.

4. Schüttelwerk (3) nach einem der Ansprüche 1 bis 3, **dadurch gekennzeichnet, dass** das Koppelteil in die Maschinenteilmasse (1) integriert ist.

5. Schüttelwerk (3) nach einem der vorstehenden Ansprüche, **dadurch gekennzeichnet, dass** die Gegenmasse (2) schwingfähig an dem Koppelteil gelagert ist.

6. Schüttelwerk (3) nach Anspruch 1, **dadurch gekennzeichnet, dass** die Lagerung hydrostatisch oder -dynamisch erfolgt.

7. Schüttelwerk (3) nach Anspruch 6, **dadurch gekennzeichnet, dass** die Gegenmasse (1) in der hydrostatisch oder -dynamischen Lagerung aufschwimmt.

8. Schüttelwerk (3) nach Anspruch 6 oder 7, **dadurch gekennzeichnet, dass** die hydrostatisch oder -dynamische Lagerung eine Ölumlaufschmierung ist.

9. Schüttelwerk (3) nach einem der vorstehenden Ansprüche, **dadurch gekennzeichnet, dass** das Koppelteil schwingfähig in Bezug auf einen Maschinenboden gelagert ist.

10. Schüttelwerk (3) nach einem der vorstehenden Ansprüche, **dadurch gekennzeichnet, dass** die Verbindung zwischen dem Koppelteil und der Maschineteilmasse (1) in Richtung der Schwingbewegung starr ausgebildet ist.

11. Schüttelwerk (3) nach einem der vorstehenden Ansprüche, **dadurch gekennzeichnet, dass** die Verbindung zwischen dem Koppelteil und der Maschineteilmasse (1) senkrecht zu der Schwingbewegung gelenkig ist und/oder dass das Schüttelwerk (3) gelenkig in Bezug auf einen Maschinenboden (11) gelagert ist.

12. Verfahren zur pneumatischen Anregung eines Schüttelwerks (3) zur Erzeugung von eindimensionalen Schwingbewegungen einer Maschinenteilmasse (1) mit einem Koppelteil zur mechanischen Ankopplung an die Maschinenteilmasse (1), mit einer Gegenmasse (2), die federelastisch mit dem Koppelteil und hierüber mit der Maschinenteilmasse (1) gekoppelt ist, und mit einem zwischen dem Koppelteil und der Gegenmasse (2) federnd wirksamen Antriebssystem, wobei das Koppelteil als Rahmen die Gegenmasse (2) umgibt und die Gegenmasse (2) darin hin und her schwingend angeordnet ist, **dadurch gekennzeichnet, dass** wenigstens eine von zwei beidseits der Gegenmasse (2) angeordneten Gasfedern des Antriebsystems in Abhängigkeit von einem Schwingungszustand mit einem minimalen und/oder mit einem maximalen Ladedruck der Gasfedern (2) beaufschlagt wird.

13. Anregungsverfahren nach Anspruch 12, **dadurch gekennzeichnet, dass** wenigstens eine von zwei beidseits der Gegenmasse (2) angeordneten Gasfedern des Antriebsystems in Abhängigkeit von einem Schwingungszustand lediglich mit einem maximalen Ladedruck der Gasfedern (2) beaufschlagt wird.

14. Anregungsverfahren nach Anspruch 12 oder 13, **dadurch gekennzeichnet, dass** eine Schwingungsfrequenz der Schwingbewegung über den jeweiligen Ladedruck der Gasfedern beeinflusst wird.

## Claims

1. Shaking unit (3) for generating one-dimensional oscillating movements of a machine part mass (1), having a coupling part for mechanical coupling to the machine part mass (1), having a counter-mass (2) which is resiliently coupled to the coupling part and, by the latter, to the machine part mass (1), and having a drive system which acts in a sprung manner between the coupling part and the counter-mass (2), wherein the coupling part surrounds the counter-mass (2) as a frame and the counter-mass (2) is arranged therein so as to oscillate back and forth, **characterized in that** the drive system comprises two gas springs arranged on both sides of the counter-mass (2) and is pneumatically excited and the pneumatic excitation acts directly on the gas springs.

2. Shaking unit (3) according to Claim 1, **characterized in that** the coupling part is a shaking unit housing (13) in which the counter-mass (2) is arranged.

3. Shaking unit (3) according to Claim 1 or 2, **characterized in that** the coupling part surrounds the counter-mass (2) in a gastight manner.

4. Shaking unit (3) according to one of Claims 1 to 3, **characterized in that** the coupling part is integrated into the machine part mass (1).

5. Shaking unit (3) according to one of the preceding claims, **characterized in that** the counter-mass (2) is oscillatably mounted on the coupling part.

6. Shaking unit (3) according to Claim 1, **characterized in that** the mounting is realized hydrostatically or hydrodynamically.

7. Shaking unit (3) according to Claim 6, **characterized in that** the counter-mass (1) floats in the hydrostatic or hydrodynamic mounting.

8. Shaking unit (3) according to Claim 6 or 7, **characterized in that** the hydrostatic or hydrodynamic mounting is provided by a circulating oil lubrication.

9. Shaking unit (3) according to one of the preceding claims, **characterized in that** the coupling part is oscillatably mounted with respect to a machine floor.

10. Shaking unit (3) according to one of the preceding claims, **characterized in that** the connection between the coupling part and the machine part mass (1) is formed rigidly in the direction of the oscillating movement.

11. Shaking unit (3) according to one of the preceding claims, **characterized in that** the connection between the coupling part and the machine part mass (1) is articulated perpendicularly to the oscillating movement and/or **in that** the shaking unit (3) is articulately mounted with respect to a machine floor (11).

12. Method for pneumatically exciting a shaking unit (3) for generating one-dimensional oscillating movements of a machine part mass (1), having a coupling part for mechanical coupling to the machine part mass (1), having a counter-mass (2) which is resiliently coupled to the coupling part and, via the latter, to the machine part mass (1), and having a drive system which acts in a sprung manner between the coupling part and the counter-mass (2), wherein the coupling part surrounds the counter-mass (2) as a frame and the counter-mass (2) is arranged therein so as to oscillate back and forth, **characterized in that** at least one of two gas springs of the drive system which are arranged on both sides of the counter-mass (2) is loaded with a minimum and/or with a maximum loading pressure of the gas springs (2) in dependence on an oscillation state.

13. Excitation method according to Claim 12, **characterized in that** at least one of two gas springs of the drive system which are arranged on both sides of the counter-mass (2) is loaded only with a maximum loading pressure of the gas springs (2) in dependence on an oscillation state.

14. Excitation method according to Claim 12 or 13, **characterized in that** an oscillation frequency of the oscillating movement is influenced via the respective loading pressure of the gas springs.

## Revendications

1. Mécanisme secoueur (3) pour produire des mouvements d'oscillations unidimensionnels d'une masse partielle de machine (1) comprenant une partie d'accouplement pour l'accouplement mécanique à la masse partielle de machine (1), comprenant une masse conjuguée (2) qui est accouplée élastiquement à ressort à la partie d'accouplement et par le biais de celle-ci à la masse partielle de machine (1) et comprenant un système d'entraînement agissant par ressort entre la partie d'accouplement et la masse conjuguée (2), la partie d'accouplement entourant la masse conjuguée (2) en tant que cadre et la masse conjuguée (2) étant disposée dans celle-ci de manière à pouvoir osciller suivant un mouvement de va-et-vient, **caractérisé en ce que** le système d'entraînement comprend deux ressorts pneumatiques disposés de chaque côté de la masse conjuguée (2) et est excité pneumatiquement et l'excitation pneumatique agit directement sur les ressorts pneumatiques.

2. Mécanisme secoueur (3) selon la revendication 1, **caractérisé en ce que** la partie d'accouplement est un boîtier du mécanisme secoueur (13) dans lequel est disposée la masse conjuguée (2).

3. Mécanisme secoueur (3) selon la revendication 1 ou 2, **caractérisé en ce que** la partie d'accouplement entoure la masse conjuguée (2) de manière étanche aux gaz.

4. Mécanisme secoueur (3) selon l'une quelconque des revendications 1 à 3, **caractérisé en ce que** la partie d'accouplement est intégrée dans la masse partielle de machine (1).

5. Mécanisme secoueur (3) selon l'une quelconque des revendications précédentes, **caractérisé en ce que** la masse conjuguée (2) est supportée de manière à pouvoir osciller sur la partie d'accouplement.

6. Mécanisme secoueur (3) selon la revendication 1, **caractérisé en ce que** le support sur palier s'effectue de manière hydrostatique ou hydrodynamique.

7. Mécanisme secoueur (3) selon la revendication 6, **caractérisé en ce que** la masse conjuguée (1) flotte dans le support sur palier hydrostatique ou hydrodynamique.

8. Mécanisme secoueur (3) selon la revendication 6 ou 7, **caractérisé en ce que** le support sur palier hydrostatique ou hydrodynamique est une lubrification à circulation d'huile.

9. Mécanisme secoueur (3) selon l'une quelconque des revendications précédentes, **caractérisé en ce que** la partie d'accouplement est supportée de manière à pouvoir osciller par rapport à une base de machine.

10. Mécanisme secoueur (3) selon l'une quelconque des revendications précédentes, **caractérisé en ce que** la connexion entre la partie d'accouplement et la masse partielle de machine (1) est réalisée sous forme rigide dans la direction du mouvement d'oscillation.

11. Mécanisme secoueur (3) selon l'une quelconque des revendications précédentes, **caractérisé en ce que** la connexion entre la partie d'accouplement et la masse partielle de machine (1) est articulée perpendiculairement au mouvement d'oscillations et/ou **en ce que** le mécanisme secoueur (3) est supporté de manière guidée par rapport à une base de machine (11).

12. Procédé d'excitation pneumatique d'un mécanisme secoueur (3) pour produire des mouvements d'oscillations unidimensionnels d'une masse partielle de machine (1) comprenant une partie d'accouplement pour l'accouplement mécanique à la masse partielle de machine (1), comprenant une masse conjuguée (2) qui est accouplée élastiquement à ressort à la partie d'accouplement et par le biais de celle-ci à la masse partielle de machine (1) et comprenant un système d'entraînement agissant par ressort entre la partie d'accouplement et la masse conjuguée (2), la partie d'accouplement entourant la masse conjuguée (2) en tant que cadre et la masse conjuguée (2) étant disposée dans celle-ci de manière à pouvoir osciller suivant un mouvement de va-et-vient, **caractérisé en ce qu'**au moins l'un de deux ressorts pneumatiques du système d'entraînement, disposés de chaque côté de la masse conjuguée (2), est sollicité avec une pression de charge minimale et/ou maximale des ressorts pneumatiques (2) en fonction d'un état d'oscillations.

13. Procédé d'excitation selon la revendication 12, **caractérisé en ce qu'**au moins l'un de deux ressorts pneumatiques du système d'entraînement disposés de chaque côté de la masse conjuguée (2) est sollicité seulement avec une pression de charge maximale des ressorts pneumatiques (2) en fonction d'un état d'oscillations.

14. Procédé d'excitation selon la revendication 12 ou 13, **caractérisé en ce qu'**une fréquence d'oscillation du mouvement d'oscillations est influencée par le biais de la pression de charge respective des ressorts pneumatiques.
